# EUROPÄISCHE PATENTSCHRIFT

(11) **EP 3 556 946 B1**
(45) Veröffentlichungstag und Bekanntmachung des Hinweises auf die Patenterteilung: **30.08.2023**
(21) Anmeldenummer: 18168580.1
(22) Anmeldetag: 20.04.2018
(51) Int. Cl.: E02F 9/16, E02F 9/08, E02F 3/34, B60N 2/14, B62D 53/02, B60N 2/24, B62D 21/18

(54) **ARBEITSFAHRZEUG MIT VERBESSERTER STABILITÄT**
WORK VEHICLE WITH IMPROVED STABILITY
ENGIN DE TRAVAIL À STABILITÉ AMÉLIORÉE

(43) Veröffentlichungstag der Anmeldung: 23.10.2019
(73) Patentinhaber: Wacker Neuson Linz GmbH, 4063 Hörsching (AT)
(72) Erfinder: ERLINGER, Josef, 4173 St. Veit im Mühlkreis (AT)
(74) Vertreter: Müller Hoffmann & Partner

(56) Entgegenhaltungen:
- EP-A2- 2 058 439
- DE-U1-202016 100 964
- FR-A1- 2 846 930
- US-A1- 2011 005 848
- US-A1- 2014 145 415

## Beschreibung

Die Erfindung betrifft ein Arbeitsfahrzeug mit einer Fahreinheit und einer Muldeneinheit, welche mit einem zwischen der Fahreinheit und der Muldeneinheit angeordneten Gelenk gekoppelt sind.

Derartige Arbeitsfahrzeuge werden üblicherweise auf Baustellen genutzt, um Material zu transportieren. An der Fahreinheit sind üblicherweise der Motor und der Bedienerarbeitsplatz angeordnet. Auf der Muldeneinheit ist eine Mulde zur Aufnahme des zu transportierenden Materials angeordnet. Fahreinheit und Muldeneinheit sind mittels eines Gelenks, z.B. mittels eines Knickpendelgelenks miteinander gekoppelt. Dabei erfolgt die Lenkung mittels einer Verschwenkung von Fahreinheit und Muldeneinheit um eine Achse, die mittels des Gelenks gebildet ist. Ein gattungsgemäßes Arbeitsfahrzeug ist beispielsweise aus der DE 10 2015 001 905 bekannt.

Aus der DE 20 2016 100 964 U1 ist ebenso ein gattungsgemäßes Arbeitsfahrzeug bekannt, das zudem eine Drehkonsole mit einem Fahrersitz aufweist, die um eine Hochachse zwischen einer Vorwärtsstellung und einer Rückwärtsstellung verschwenkbar ist.

Derartige Arbeitsfahrzeuge transportieren im Vergleich zu ihrem Eigengewicht hohe Lasten und befahren häufig unbefestigte Wege. Die Hersteller solcher Maschinen sind deshalb ständig bestrebt die Stabilität dieser Arbeitsfahrzeuge zu optimieren. Zudem müssen die Bediener eine erhöhte Sitzposition einnehmen, um auch bei beladenem Fahrzeug eine ausreichende Übersicht zu haben.

Die Ziele, die sich auch diesen einzelnen Anforderungen ergeben widersprechen sich teilweise. Aufgabe der Erfindung ist es deshalb ein Arbeitsfahrzeug anzugeben, welches sich auch bei hohen Lasten stabil und sicher auf unebenem Untergrund bewegen kann und zudem dem Fahrer ein sicheres Führen des Fahrzeugs erlaubt.

Die Aufgabe wird gelöst durch den Gegenstand des unabhängigen Anspruchs. Vorteilhafte Ausgestaltungen und zweckmäßige Weiterbildungen sind in den anhängigen Ansprüchen angegeben.

Es wird ein Arbeitsfahrzeug vorgeschlagen mit einer Fahreinheit, die einen Antriebsmotor sowie eine erste Achse mit zwei zugeordneten Rädern aufweist, sowie einer Muldeneinheit, die eine Mulde zum Aufnehmen einer Last sowie eine zweite Achse mit zwei zugeordneten Rädern aufweist, wobei zwischen der Fahreinheit und der Muldeneinheit ein Gelenk zum Koppeln der Fahreinheit mit der Muldeneinheit angeordnet ist, und zwar derart, dass die Fahreinheit und die Muldeneinheit um wenigstens eine Hochachse Z des Arbeitsfahrzeugs relativ zueinander bewegbar sind, wobei in einer gestreckten Position des Arbeitsfahrzeugs (also in einer Stellung, in der sich die beiden Achsen parallel zueinander erstrecken) zwischen einem axialen Mittelpunkt der Drehachse der ersten Achse und einem axialen Mittelpunkt der Drehachse der zweiten Achse ein horizontaler Abstand X vorliegt und ein horizontaler Abstand zwischen dem Mittelpunkt der ersten Achse und einem Nutzlastschwerpunkt des Arbeitsfahrzeugs derart gewählt ist, dass dessen Wert in einem Bereich von 0,84 X +/- 10% liegt, sowie ein horizontaler Abstand zwischen einem Mittelpunkt der ersten Achse und der Hochachse Z derart gewählt ist, dass dieser in einem Bereich von 0,47 X +/- 10% liegt.

Als axialer Mittelpunkt der ersten Achse bzw. der zweiten Achse wird somit ein Punkt verstanden, der sich auf der jeweiligen, durch die Drehung der von den jeweiligen Achsen getragenen Radnaben definierten Drehachse befindet, und zwar in Bezug auf den Abstand der jeweils an den Stirnseiten der Achsen angeordneten Radnaben in der Mitte zwischen den Radnaben liegend.

Als Basis für die Betrachtung der Maschinenverhältnisse wird der Abstand zwischen den Achsen genutzt. Dabei wird von den beiden Mittelpunkten der Räder, d.h. insbesondere der Drehachsen der Radnaben gemessen. Alle Messungen der Werte, wie sie in der vorliegenden Anmeldung genannt sind, erfolgen bei waagrecht stehendem Arbeitsfahrzeug in gestreckter Position. Das Arbeitsfahrzeug steht in einer gestreckten Position, wenn die Achsen der Muldeneinheit und der Antriebseinheit parallel zueinander stehen, d.h. wenn keine Verschwenkung um die Hochachse Z vorliegt. In dieser Stellung würde das Arbeitsfahrzeug geradeaus fahren.

Als Nutzlastschwerpunkt wird der Schwerpunkt der in der Mulde aufgenommenen maximalen nominalen Nutzlast in der Mulde bezeichnet. Die nominale Nutzlast ist diejenige Nutzlast für die das Arbeitsfahrzeug ausgelegt und/oder zugelassen ist. Der Nutzlastschwerpunkt bestimmt sich durch die Anordnung der Mulde auf der Muldeneinheit. Als Nutzlast wird eine für das Arbeitsfahrzeug typische Last angesehen, wie z.B. Erdreich.

Erfindungsgemäß hat das Arbeitsfahrzeug eine Hauptfahrrichtung, in welcher die Muldeneinheit in Fahrtrichtung der Fahreinheit folgt. Die Fahrt in Hauptfahrrichtung kann auch als Vorwärtsfahrt bezeichnet werden. Der Fahrzeugführer hat die Mulde und damit die Nutzlast im Rücken und somit freie Sicht auf die zu befahrende Strecke.

Ferner ist ein Fahrzeugsitz für einen Bediener bzw. Fahrzeugführer vorgesehen, der drehbar angeordnet sein kann, wobei das Arbeitsfahrzeug sowohl in die Hauptfahrrichtung bewegbar ist, als auch in eine Nebenfahrrichtung bewegbar ist, in welcher die Fahreinheit der Muldeneinheit folgt, wobei der Fahrzeugsitz in der Nebenfahrrichtung in Richtung der Muldeneinheit ausgerichtet ist. Die Nebenfahrrichtung kann auch als Rückwärtsfahrt bezeichnet werden. Der drehbare Sitz ist dabei um mindestens 150°, bevorzugt um 180° verschwenkbar, so dass der Fahrzeugführer zur Rückwärtsfahrt in Fahrtrichtung sitzt. Er blickt dabei in Richtung der Muldeneinheit, die nun voraus fährt, so dass die Antriebseinheit der Muldeneinheit folgt.

Erfindungsgemäß ist das Arbeitsfahrzeug derart gestaltet, dass ein vertikaler Abstand zwischen einem Mittelpunkt der ersten Achse und einem Mittelpunkt einer Kurbelwelle eines Antriebsmotors derart gewählt ist, dass dieser in einem Bereich von 0,13 X +/- 10% liegt. Mit dieser Anordnung liegt der Motor, der durch sein Gewicht einen wesentlichen Einfluss auf die Stabilität des Arbeitsfahrzeugs hat, in einer bevorzugten Position.

Ferner kann ein vertikaler Abstand zwischen einem Mittelpunkt der ersten Achse und einem Sitzindexpunkt derart gewählt sein, dass dieser in einem Bereich von 0,52 X +/- 10% liegt. Der Sitzindexpunkt ist ein im Bereich der Erdbaumaschinen festgelegter Punkt und ist durch die DIN EN ISO 5353 in der zum Zeitpunkt der Anmeldung gültigen Fassung definiert. Der Sitzindexpunkt ist deshalb für jede Maschine jedes Herstellers klar definiert und als Bezugspunkt geeignet. Der Sitzindexpunkt ist ein charakteristischer Wert für den Sitz und kann deshalb direkt von jedem Sitzhersteller oder Fahrzeughersteller angegeben werden. Der Sitzindexpunkt ist in Bezug auf die Maschine festgelegt und verändert seine Position nicht durch den Verstell- und/oder Schwingbereich des Sitzes. Da im vorliegenden Fall jedoch die Möglichkeit besteht, den Sitz zwischen einer Vorwärts- und Rückwärtsfahrt zu verschwenken, wird klargestellt, dass sich die Angaben zum Sitzindexpunkt auf die Stellung des Sitzes in Hauptfahrrichtung beziehen. Gemäß der Norm DIN EN ISO 5353 ist der Sitzindexpunkt gleich dem Schnittpunkt zwischen den theoretischen Achsen des menschlichen Oberkörpers eines Bedieners und des menschlichen Oberschenkels auf der senkrechten Ebene durch die Sitzmittellinie.

Weiter kann vorgesehen sein, dass das Arbeitsfahrzeug eine Kabine aufweist, in welcher der Fahrzeugsitz angeordnet ist. Dies erhöht den Komfort für den Bediener.

In einer Variante ist das Arbeitsfahrzeug dadurch gekennzeichnet, dass ein vertikaler Abstand zwischen dem Sitzindexpunkt und einer Dachunterseite einer Kabine derart gewählt ist, dass dieser in einem Bereich von 0,37 X +/- 10% liegt.

In einer Ausführungsform ist ein Ventildeckel des Antriebsmotors oberhalb einer Bodenfläche der Kabine angeordnet. Mit dieser Konstruktion ist es möglich, den Schwerpunkt des Arbeitsfahrzeugs niedrig zu halten, da die Bodenfläche der Kabine nicht wie sonst üblich erst über dem Motor, d.h. über dem Ventildeckel des Motors liegt. Der Ventildeckel ist bei Reihenmotoren üblicherweise der höchste Punkt des Motors. Alternativ kann auch allgemein der höchste Punkt des Motors, d.h. insbesondere des Motorblocks und/oder des Zylinderkopfes betrachtet werden.

Eine weitere Variante besteht darin, eine Oberkante der Mulde in einer Fahrposition oberhalb des Sitzindexpunktes anzuordnen. Als Oberkante der Mulde wird der höchste Punkt der Mulde bezeichnet. Die Fahrposition der Mulde ist üblicherweise diejenige Position, in der die Mulde im Wesentlichen waagerecht positioniert ist und ein Kippsystem der Mulde eingefahren ist. Die Kippkante der Mulde zeigt dabei entgegen der Hauptfahrrichtung. Mit der Wahl der Oberkante der Mulde oberhalb des Sitzindexpunktes wird ein niedriger Schwerpunkt der Gesamtmaschine erreicht.

In einer Ausführungsform kann die Mulde relativ zur Muldeneinheit um eine Hochachse H verschwenkt werden, wobei eine Hüllkurve der Mulde einen Durchmesser von 1,31 X +/- 10% aufweist. Mittels der Verschwenkung kann der Inhalt der Mulde nicht nur entgegen der Hauptfahrrichtung abgekippt werden, sondern auch zu den beiden Seiten des Arbeitsfahrzeugs. Die Mulde hat dazu eine Verschwenkeinrichtung mittels welcher die Mulde aus einer Mittenposition, mit einem Winkel von jeweils mindestens 80° zu beiden Seiten der Arbeitsmaschine verschwenkt werden kann. Die Hüllkurve ergibt sich in einer Draufsicht auf das Arbeitsfahrzeug als gedachte Kurve, die bei einer Verschwenkung der Mulde zwischen ihren maximalen Endpositionen beschrieben wird. Die Mulde befindet sich dabei in Fahrposition. Der Durchmesser der Hüllkurve der Mulde eignet sich in Relation zum Achsabstand als Maß für die Stabilität des Arbeitsfahrzeugs, da bei beladener Mulde eine entsprechende Abstützung mittels der Breite der Achsen und der Reifen vorgesehen sein muss. Allerdings kann sich je nach Wahl der Bereifung eine unterschiedliche Breite des Arbeitsfahrzeugs ergeben, weswegen die Wahl des Durchmessers des Hüllkreises als unveränderliches Maß bevorzugt ist.

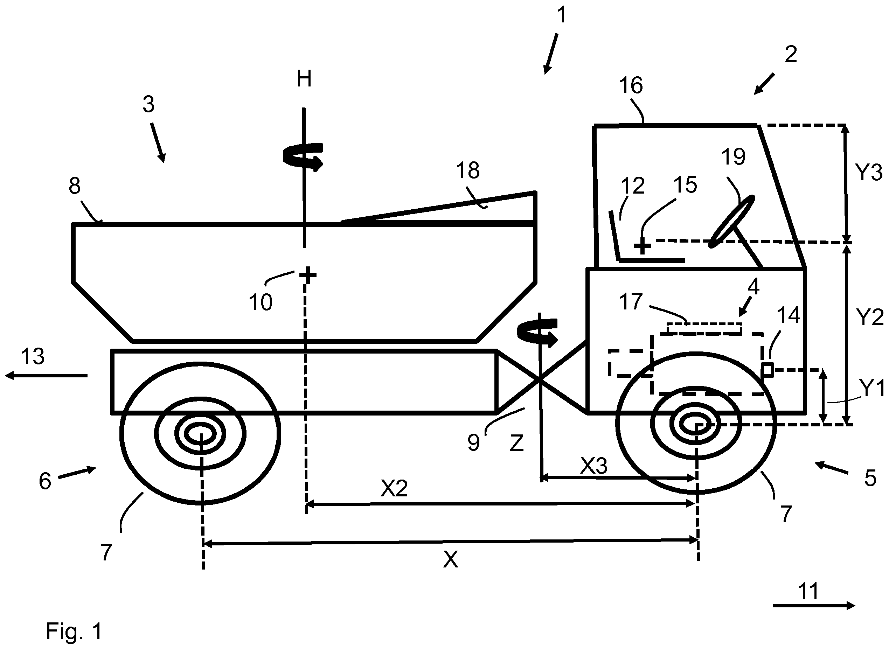

Weitere Vorteile, Merkmale und Einzelheiten der Erfindung ergeben sich aus der nachfolgenden Beschreibung einer beispielhaften Ausführungsform sowie anhand der Zeichnung.

Die einzige **Figur** zeigt eine schematische, nicht maßstäbliche Seitenansicht eines Arbeitsfahrzeugs, insbesondere eines sogenannten Dumpers.

Das Arbeitsfahrzeug 1 hat eine Fahreinheit 2 und eine Muldeneinheit 3, die mit einem Gelenk 9 derart gekoppelt sind, dass sich mittels der dadurch gebildeten Hochachse Z eine Knicklenkung ergibt.

An der Fahreinheit 2 ist eine als Vorderachse dienende erste Achse 5 vorgesehen, an deren stirnseitigen Enden Radnaben angeordnet sind, die entsprechende Räder 7 in bekannter Weise tragen. Analog ist an der Muldeneinheit 3 eine als Hinterachse dienende zweite Achse 6 vorgesehen, an deren stirnseitigen Enden ebenfalls Radnaben angeordnet sind, die entsprechende Räder 7 tragen.

Die ersten und zweiten Achsen 5, 6 sind starr, d.h. in ihrer Ausrichtung zur jeweiligen Fahreinheit 2 und Muldeneinheit 3 fest angeordnet.

An der Fahreinheit 2 ist die erste Achse 5 angeordnet. Über der Achse 5 sitzt ein Antriebsmotor 4, der im gezeigten Beispiel ein Verbrennungsmotor ist, aber auch als elektrischer Motor ausgestaltet sein kann. Ferner sind an der Fahreinheit 2 ein Fahrzeugsitz 12, ein Lenkrad 19 und eine Kabine 16 angeordnet. Die Kabine 16 ist allerdings optional und könnte auch durch einen Überrollbügel ersetzt werden.

An der Muldeneinheit 3 sind die zweite Achse 6 und eine Mulde 8 angeordnet. Die Mulde 8 dient zum Aufnehmen der Nutzlast, insbesondere Schüttgut, und kann mit einer nicht gezeigten Entladevorrichtung gekippt werden.

Das Arbeitsfahrzeug 1 kann sich mittels des Antriebsmotors 4 in die Hauptfahrrichtung 11 bewegen. Dabei bewegt sich die Fahreinheit 2 voraus und die Muldeneinheit 3 folgt. Der Fahrersitz 12 ist in Richtung der Hauptfahrrichtung 11 ausgerichtet, so dass ein Bediener in Richtung der Hauptfahrrichtung 11 blickt.

Der Fahrersitz 12 ist drehbar gestaltet, so dass dieser gedreht werden kann, wenn das Arbeitsfahrzeug 1 in eine Nebenfahrrichtung 13, d.h. rückwärts fahren soll.

Bevorzugt sind auch die zum Betrieb des Fahrzeugs notwendigen Steuerelemente ebenfalls drehbar ausgestaltet und/oder doppelt vorhanden. Bei Fahrt in Nebenfahrrichtung 13 bewegt sich die Muldeneinheit 3 voraus und die Fahreinheit 2 folgt dieser. Der Bediener kann auf dem gedrehten Sitz 12 in Richtung der Nebenfahrrichtung 13 blicken, was die Fahrt sicherer macht.

Das Arbeitsfahrzeug wird mittels des Antriebsmotors 4 angetrieben. Hierzu ist eine Hydraulikpumpe am Motor angeordnet, welche den notwendigen Druck bzw. Volumenstrom liefert, um einen Hydromotor anzutreiben. Der Hydromotor treibt die Räder an. Auch die weiteren Funktionen, wie beispielsweise der Antrieb des Kippsystems der Mulde und auch der Verschwenkung der Mulde sowie der Knicklenkung werden hydrostatisch mittels der Hydraulikpumpe angetrieben.

Es hat sich gezeigt, dass Maßnahmen ergriffen werden müssen, um die Stabilität derartiger Arbeitsfahrzeuge zu erhöhen. Insbesondere wenn die Nutzlast im Vergleich zu früheren Maschinen erhöht werden soll.

Zudem ist in einer Variante des Arbeitsfahrzeugs vorgesehen, dass der Fahrzeugsitz 12 drehbar ist. Dies ermöglicht höhere Geschwindigkeiten bei der Rückwärtsfahrt, so dass das Arbeitsfahrzeug nicht nur in Vorwärtsfahrt sondern auch in Rückwärtsfahrt möglichst standsicher, d.h. stabil ausgestaltet sein muss. Die größtmögliche Sicherheit ist aber auch bei Maschinen notwendig, die keinen drehbaren Fahrersitz aufweisen, so dass ein drehbarer Fahrersitz kein erfindungsgemäß notwendiges Merkmal ist.

Es hat sich gezeigt, dass eine bestimmte Auslegung gewisser Abmessungen, insbesondere deren Verhältnisse zueinander, zu einem besonders sicheren Fahrverhalten führen.

Als Ausgangsbasis hat sich der Radstand, d.h. der Abstand zwischen der ersten und zweiten Achse als geeignet erwiesen.

Basierend darauf können die anderen Abstände ins Verhältnis gesetzt werden.

Der horizontale Abstand X zwischen dem Mittelpunkt der Drehachse der ersten Achse 5 und dem Mittelpunkt der Drehachse der zweiten Achse 6 beträgt im Ausführungsbeispiel 2700 mm. Als Mittelpunkt wird hierbei die Mitte zwischen den jeweils an den Enden der Achsen 5,6 angeordneten Radnaben verstanden.

Der horizontale Abstand X zwischen dem Mittelpunkt der ersten Achse 5 und einem Nutzlastschwerpunkt 10 des Arbeitsfahrzeugs beträgt im Ausführungsbeispiel 2273 mm. Als Relation zum Abstand X ergibt sich damit 2273mm/2700mm = 0,84.

Der horizontale Abstand X2 zwischen einem Mittelpunkt der ersten Achse 5 und der Hochachse Z beträgt im Ausführungsbeispiel 1275 mm. Als Relation zum Abstand X ergibt sich damit 1275mm/2700mm = 0,47.

Der vertikale Abstand Y1 zwischen einem Mittelpunkt bzw. der Drehachse der ersten Achse 5 und einem Mittelpunkt bzw. der Drehachse der Kurbelwelle (14) des Antriebsmotors beträgt 361 mm. Als Relation zum Abstand X ergibt sich damit 361mm/2700 mm = 0,13.

Der vertikale Abstand Y2 zu einem Mittelpunkt bzw. der Drehachse der ersten Achse 5 und dem Sitzindexpunkt 15 beträgt im Ausführungsbeispiel 1403mm. Als Relation zum Abstand X ergibt sich damit 0,52.

Der vertikale Abstand Y3 zwischen dem Sitzindexpunkt 15 und einer Dachunterseite der Kabine 16 beträgt 1000mm. Als Relation zum Abstand X ergibt sich damit 0,37.

Der Durchmesser einer Hüllkurve im gewählten Ausführungsbeispiel beträgt 3530mm. Als Relation zum Abstand X ergibt sich damit 1,31.

Versuche haben gezeigt, dass auch eine Variation der genannten Werte noch eine vorteilhafte Stabilität gewährleistet. Dabei können die Werte besonders bevorzugt um +/- 10% variiert werden um die Stabilität weiter zu gewährleisten.

Auch bei einer bevorzugten Variation der Werte um +/- 5% bleibt eine ausreichende Stabilität erhalten. Ferner kann auch eine geringe Variation um +/- 2,5% gewählt werden.

Für die Stabilität des Arbeitsfahrzeugs 1 hat sich ferner das Verhältnis zwischen dem vertikalen Abstand Y2 zwischen dem axialen Mittelpunkt der ersten Achse 5 und dem Sitzindexpunkt 15 sowie dem vertikalen Abstand Y3 zwischen dem Sitzindexpunkt 15 und der Dachunterseite der Kabine 16 als charakteristischer Wert erwiesen. Die Maße betragen im gewählten Ausführungsbeispiel für den Abstand von der Achse 5 und dem Sitzindexpunkt 1403 mm und für den Abstand vom Sitzindexpunkt 15 und der Dachunterseite der Kabine 1000mm.

Als Verhältnis ergibt sich damit 1403mm / 1000mm = 1,40.

Auch für diesen Wert gelten die zuvor genannten Möglichkeiten, die Werte zu variieren.

## Patentansprüche

1. Arbeitsfahrzeug (1) mit
- einer Fahreinheit (2), die einen Antriebsmotor (4) sowie eine erste Achse (5) mit zwei zugeordneten Rädern (7) aufweist;
- einer Muldeneinheit (3), die eine Mulde (8) zum Aufnehmen einer Last sowie eine zweite Achse (6) mit zwei zugeordneten Rädern (7) aufweist; und mit
- einem zwischen der Fahreinheit (2) und der Muldeneinheit (3) angeordneten Gelenk (9) zum Koppeln der Fahreinheit (2) mit der Muldeneinheit (3), derart, dass die Fahreinheit (2) und die Muldeneinheit (3) um wenigstens eine Hochachse Z des Arbeitsfahrzeugs (1) relativ zueinander bewegbar sind;
wobei
- in einer gestreckten Position des Arbeitsfahrzeugs (1) zwischen einem axialen Mittelpunkt der Drehachse der ersten Achse (5) und einem axialen Mittelpunkt der Drehachse der zweiten Achse (6) ein horizontaler Abstand X vorliegt;
- ein horizontaler Abstand X2 zwischen dem Mittelpunkt der ersten Achse (5) und einem Nutzlastschwerpunkt (10) des Arbeitsfahrzeugs (1) derart gewählt ist, dass dessen Wert in einem Bereich 0,84 X +/- 10% liegt;
- ein horizontaler Abstand X3 zwischen dem Mittelpunkt der ersten Achse (5) und der Hochachse Z derart gewählt ist, dass dieser in einem Bereich von 0,47 X +/- 10% liegt; **dadurch gekennzeichnet, dass**
- ein vertikaler Abstand Y1 zwischen der Drehachse der ersten Achse (5) und der Drehachse einer Kurbelwelle (14) des Antriebsmotors (4) derart gewählt ist, dass er in einem Bereich von 0,13 X +/- 10% liegt.

2. Arbeitsfahrzeug (1) nach Anspruch 1, **dadurch gekennzeichnet, dass** das Arbeitsfahrzeug (1) eine Hauptfahrrichtung (11) aufweist, in welcher die Muldeneinheit (3) in Fahrtrichtung der Fahreinheit (2) folgt.

3. Arbeitsfahrzeug (1) nach Anspruch 1 oder 2, **dadurch gekennzeichnet, dass**
- ein Fahrzeugsitz (12) für einen Bediener vorgesehen ist, der drehbar angeordnet ist, und dass
- das Arbeitsfahrzeug (1) sowohl in die Hauptfahrrichtung (11) bewegbar ist, als auch in eine Nebenfahrrichtung (13) bewegbar ist, in welcher die Fahreinheit (2) der Muldeneinheit (3) folgt, wobei der Fahrzeugsitz (12) in der Nebenfahrrichtung (13) in Richtung der Muldeneinheit (3) ausgerichtet ist.

4. Arbeitsfahrzeug (1) nach einem der vorhergehenden Ansprüche, **dadurch gekennzeichnet, dass** ein vertikaler Abstand Y2 zwischen der Drehachse der ersten Achse (5) und einem Sitzindexpunkt (15) derart gewählt ist, dass er in einem Bereich von 0,52 X +/- 10% liegt.

5. Arbeitsfahrzeug (1) nach einem der vorhergehenden Ansprüche, **dadurch gekennzeichnet, dass** das Arbeitsfahrzeug (1) eine Kabine (16) aufweist, in welcher der Fahrzeugsitz (12) angeordnet ist.

6. Arbeitsfahrzeug (1) nach den Ansprüchen 4 und 5, **dadurch gekennzeichnet, dass** ein vertikaler Abstand Y3 zwischen dem Sitzindexpunkt (15) und einer Dachunterseite einer Kabine (16) derart gewählt ist, dass er in einem Bereich von 0,37 X +/- 10% liegt.

7. Arbeitsfahrzeug (1) nach einem der vorhergehenden Ansprüche, **dadurch gekennzeichnet, dass** ein Ventildeckel (17) des Antriebsmotors (4) oberhalb einer Bodenfläche der Kabine (16) liegt.

8. Arbeitsfahrzeug (1) nach Anspruch 4 oder nach Anspruch 4 und einem der vorhergehenden Ansprüche, **dadurch gekennzeichnet, dass** eine Oberkante (18) der Mulde (8) in einer Fahrposition oberhalb des Sitzindexpunktes (15) liegt.

9. Arbeitsfahrzeug (1) nach einem der vorhergehenden Ansprüche, **dadurch gekennzeichnet, dass** die Mulde (8) relativ zur Muldeneinheit (3) um eine Hochachse H verschwenkt werden kann, wobei eine Hüllkurve der Mulde (8) einen Durchmesser von 1,31 X +/- 10% aufweist.

## Claims

1. Work vehicle (1) comprising
- a driving unit (2) which has a drive motor (4) and a first axle (5) with two associated wheels (7);
- a trough unit (3) which has a trough (8) for receiving a load and a second axle (6) with two associated wheels (7); and comprising
- an articulation (9) which is arranged between the driving unit (2) and the trough unit (3) for coupling the driving unit (2) to the trough unit (3) such that the driving unit (2) and the trough unit (3) are movable relative to one another about at least one vertical axis Z of the work vehicle (1);
wherein
- in an extended position of the work vehicle (1) a horizontal distance X exists between an axial centre point of the axis of rotation of the first axle (5) and an axial centre point of the axis of rotation of the second axle (6);
- a horizontal distance X2 between the centre point of the first axle (5) and a payload centre of gravity (10) of the work vehicle (1) is selected such that its value is in a range 0.84 X +/- 10%;
- a horizontal distance X3 between the centre point of the first axle (5) and the vertical axis Z is selected to be in a range of 0.47 X +/- 10%; **characterised in that**
- a vertical distance Y1 between the axis of rotation of the first axle (5) and the axis of rotation of a crankshaft (14) of the drive motor (4) is selected to be in a range of 0.13 X +/- 10%.

2. Work vehicle (1) as claimed in claim 1, **characterised in that** the work vehicle (1) has a main direction of travel (11), in which the trough unit (3) follows the driving unit (2) in the direction of travel.

3. Work vehicle (1) as claimed in claim 1 or 2, **characterised in that**
- a vehicle seat (12) for an operator is provided, which is arranged so as to be rotatable, and **in that**
- the working vehicle (1) is movable both in the main direction of travel (11) and in a secondary direction of travel (13), in which the driving unit (2) follows the trough unit (3), wherein the vehicle seat (12) is oriented in the secondary direction of travel (13) in the direction of the trough unit (3).

4. Work vehicle (1) as claimed in any one of the preceding claims, **characterised in that** a vertical distance Y2 between the axis of rotation of the first axle (5) and a seat index point (15) is selected to be in a range of 0.52 X +/- 10%.

5. Work vehicle (1) as claimed in any one of the preceding claims, **characterised in that** the work vehicle (1) has a cab (16), in which the vehicle seat (12) is arranged.

6. Work vehicle (1) as claimed in claims 4 and 5, **characterised in that** a vertical distance Y3 between the seat index point (15) and a roof underside of a cab (16) is selected to be in a range of 0.37 X +/- 10%.

7. Work vehicle (1) as claimed in any one of the preceding claims, **characterised in that** a valve cover (17) of the drive motor (4) is located above a floor surface of the cab (16).

8. Work vehicle (1) as claimed in claim 4 or as claimed in claim 4 and any one of the preceding claims, **characterised in that** an upper edge (18) of the trough (8) is located in a driving position above the seat index point (15).

9. Work vehicle (1) as claimed in any one of the preceding claims, **characterised in that** the trough (8) can be pivoted relative to the trough unit (3) about a vertical axis H, wherein an envelope of the trough (8) has a diameter of 1.31 X +/- 10%.

## Revendications

1. Véhicule de travail (1) avec
- une unité de conduite (2) qui comprend un moteur d'entraînement (4) ainsi qu'un premier essieu (5) deux roues (7) correspondantes ;
- une unité de benne (3) qui comprend une benne (8) pour le logement d'une charge ainsi qu'un deuxième essieu (6) avec deux roues (7) correspondantes ; et avec
- une articulation (9) disposée entre l'unité de conduite (2) et l'unité de benne (3), pour le couplage de l'unité de conduite (2) avec l'unité de benne (3), de façon à ce que l'unité de conduite (2) et l'unité de benne (3) puissent être déplacées l'une par rapport à l'autre autour d'au moins un axe vertical Z du véhicule de travail (1) ;
dans lequel
- dans une position déployée du véhicule de travail (1), entre un point central axial de l'axe de rotation du premier essieu (5) et un point central axial de l'axe de rotation du deuxième essieu (6), il existe une distance horizontale X ;
- une distance horizontale X2 entre le point central du premier essieu (5) et un centre de gravité de charge utile (10) du véhicule de travail (1) est choisie de façon à ce que sa valeur soit de l'ordre de 0,84 X ± 10 %;
- une distance horizontale X3 entre le point central du premier essieu (5) et l'axe vertical Z est choisie de façon à ce que sa valeur soit de l'ordre de 0,47 X ± 10 %; **caractérisé en ce que**
- une distance verticale Y1 entre l'axe de rotation du premier essieu (5) et l'axe de rotation d'un vilebrequin (14) du moteur d'entraînement (4) est choisie de façon à ce que sa valeur soit de l'ordre de 0,13 X ± 10 %.

2. Véhicule de travail (1) selon la revendication 1, **caractérisé en ce que** le véhicule de travail (1) présente une direction de marche principale (11) dans laquelle l'unité de benne (3) suit l'unité de conduite (2) dans le sens de la marche.

3. Véhicule de travail (1) selon la revendication 1 ou 2, **caractérisé en ce que**
- un siège de véhicule (12), disposé de manière rotative, est prévu pour un opérateur et
- le véhicule de travail (1) peut être déplacé aussi bien dans la direction de marche principale (11) que dans une direction de marche secondaire (13) dans laquelle l'unité de conduite (2) suit l'unité de benne (3), dans lequel le siège du véhicule (12) est orienté, dans la direction de marche secondaire (13), vers l'unité de benne (3).

4. Véhicule de travail (1) selon l'une des revendications précédentes, **caractérisé en ce qu'**une distance verticale Y2 entre l'axe de rotation du premier essieu (5) et un pint d'index du siège (15) est choisie de façon à ce que sa valeur soit de l'ordre de 0,52 X ± 10 %.

5. Véhicule de travail (1) selon l'une des revendications précédentes, **caractérisé en ce que** le véhicule de travail (1) comprend une cabine (16) dans lequel le siège du véhicule (12) est disposé.

6. Véhicule de travail (1) selon les revendications 4 et 5, **caractérisé en ce qu'**une distance verticale Y3 entre le point d'index du siège (15) et un côté inférieur du toit d'une cabine (16) est choisie de façon à ce que sa valeur soit de l'ordre de 0,37 X ± 10 %.

7. Véhicule de travail (1) selon l'une des revendications précédentes, **caractérisé en ce qu'**un couvercle de soupape (17) du moteur d'entraînement (4) se trouve au-dessus d'une surface du sol de la cabine (16).

8. Véhicule de travail (1) selon la revendication 4 ou selon la revendication 4 et une des revendications précédentes, **caractérisé en ce qu'**une arête supérieure (18) de la benne (8) se trouve, dans une position de conduite, au-dessus du point d'index du siège (15).

9. Véhicule de travail (1) selon l'une des revendications précédentes, **caractérisé en ce que** la benne (8) peut être pivotée par rapport à l'unité de benne (3) autour d'un axe vertical H, dans lequel une courbe d'enveloppe de la benne (8) présente un diamètre de 1,31 X ± 10 %.
